(19)

**Europäisches Patentamt**
**European Patent Office**
**Office européen des brevets**

(11) **EP 4 730 592 A1**

(12) **EUROPEAN PATENT APPLICATION**

(43) Date of publication:
   **22.04.2026 Bulletin 2026/17**

(21) Application number: **24207266.8**

(22) Date of filing: **17.10.2024**

(51) International Patent Classification (IPC):
   *H02J 7/00* (2026.01)   *A24F 40/50* (2020.01)
   *A24F 40/60* (2020.01)

(52) Cooperative Patent Classification (CPC):
   **H02J 7/82; A24F 40/50; A24F 40/60**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **GE KH MA MD TN**

(71) Applicant: **Imperial Tobacco Limited**
   **Bristol BS3 2LL (GB)**

(72) Inventors:
   • **BATCHELOR, Glendon**
     **Bristol, BS3 2LL (GB)**
   • **ROEBUCK, Jason**
     **Bristol, BS3 2LL (GB)**
   • **CROFTON, Martin**
     **Warwick, CV34 4AB (GB)**
   • **DAY-SMITH, Hugh John**
     **Warwick, CV34 4AB (GB)**
   • **JAANUS, Anna**
     **Warwick, CV34 4AB (GB)**

(74) Representative: **Mewburn Ellis LLP**
   **Aurora Building**
   **Counterslip**
   **Bristol BS1 6BX (GB)**

(54) **AEROSOL GENERATING APPARATUS**

(57)   The present disclosure relates to an aerosol generating apparatus. A drawback with known aerosol generating apparatuses is that a user may be unable to immediately and easily determine a status or a mode of operation of the apparatus. Accordingly, there is provided an aerosol generating apparatus (1), comprising a battery (2), having a total battery capacity for initiating a predefined number m of aerosol generating sessions, a plurality j of individually controllable visual indication elements (57) for indicating the predefined number m of aerosol generating sessions, and a controller (12,56) configured to determine the number n of remaining aerosol generating sessions based on the current battery capacity, and control the plurality of visual indication elements (57) to indicate the number n of remaining aerosol generating sessions by illuminating a number k of the visual indication elements, wherein k <= j and n <= m, wherein k is a function of $j \times n/m$, and wherein j, k, m, n are whole numbers.

Fig. 7

## Description

## FIELD

The present disclosure relates to an aerosol generating apparatus.

## BACKGROUND

A typical aerosol generating apparatus may comprise a power supply, an aerosol generating unit that is driven by the power supply, an aerosol precursor, which in use is aerosolised by the aerosol generating unit to generate an aerosol, and a delivery system for delivery of the aerosol to a user.

A drawback with known aerosol generating apparatuses is that a user may be unable to immediately and easily determine a status or a mode of operation of the apparatus.

In spite of the effort already invested in the development of aerosol generating apparatuses/systems further improvements are desirable.

## SUMMARY

According to a first aspect of the present disclosure, there is provided an aerosol generating apparatus, comprising a battery, having a total battery capacity for initiating a predefined number m of aerosol generating sessions, a plurality j of individually controllable visual indication elements for indicating the predefined number m of aerosol generating sessions, and a controller configured to determine the number n of remaining aerosol generating sessions based on the current battery capacity, and control the plurality of visual indication elements to indicate the number n of remaining aerosol generating sessions by illuminating a number k of the visual indication elements, wherein $k <= j$ and $n <= m$, wherein k is a function of $j \times n/m$, and wherein j, k, m, n are whole numbers.

According to a first aspect of the present disclosure, there is provided an aerosol generating apparatus, comprising a battery, having a total battery capacity for initiating a predefined number m of aerosol generating sessions, 5 individually controllable visual indication elements for indicating the predefined number m of aerosol generating sessions, and a controller configured to determine the number n of remaining aerosol generating sessions based on the current battery capacity, and control the plurality of visual indication elements to indicate the number n of remaining aerosol generating sessions by illuminating a number k of the visual indication elements, wherein $k <= 5$ and $n <= m$, wherein k is a function of $5 \times n/m$, and wherein k, m, n are whole numbers.

According to a third aspect of the present disclosure, there is provided a method of operating an aerosol generating apparatus, comprising a battery, having a total battery capacity for initiating a predefined number m of aerosol generating sessions, and a plurality j of individually controllable visual indication elements for indicating the predefined number m of aerosol generating sessions the method comprising the steps determine the number n of remaining aerosol generating sessions based on the current battery capacity, and control the plurality of visual indication elements to indicate the number n of remaining aerosol generating sessions by illuminating a number k of the visual indication elements, wherein $k <= j$, $n <= m$ and wherein k is a function of $j \times n/m$, and wherein j, k, m, n are whole numbers.

According to a fourth aspect of the present disclosure, there is provided a computer program product or computer readable storage medium comprising instructions which, when executed by a processing element, cause the processing element to carry out the step of the method according to the present disclosure.

The present disclosure provides an aerosol generating apparatus having a graphical user interface comprising a plurality of visual indication elements for indicating a status and/or a mode of operation of the aerosol generating apparatus. Visual indication elements may be embodied as LEDs. Alternatively, the visual indication elements may be embodied as OLEDs, quantum dots, laser diodes, or using fiber-optic lighting to transmit light from a light source, e.g., arranged within the aerosol generating apparatus, to the surface of the housing.

The plurality of LEDs may in particular be used, to visualize a remaining time, a passage of time, or a percentage of a specific value or parameter, e.g., the current capacity of a battery compared to a nominal capacity, which may correspond to a full battery. To visualize a remaining time or the passing of time, the graphical user interface may e.g. consist of five separate visual indication elements that counts down to convey the progress of a heating session or smoking session to a user of the aerosol generating apparatus. E.g., in case of five visual indication elements, each of the visual indication elements may be present for example one minute of a five-minute smoking session. To visualize progression through the smoking session, the visual indication elements may successively counts down every minute. For example, five visual indication elements being illuminated may correspond to a time having passed between zero seconds and 59 seconds, whereas four visual indication elements being illuminated may correspond to a time having passed between one minute and one minute and 59 seconds. Three visual indication elements being illuminated may correspond to a time having passed between the two minutes and two minutes and 59 seconds, two visual indication elements being illuminated may correspond to a time having passed between three minutes and three minutes and 59 seconds, whereas one visual indication element being illuminated may correspond to a time having passed between four minutes and four minutes and 59 seconds or 5 minutes. To indicate half minutes, a particular visual indication element may switch from a steady illumination to an intermittent or blinking illumination in the second half of a particular minute. E.g., in the final 30 seconds of the smoking session, the remaining one visual indication element being illuminated may flash instead of being illuminated continuously. The same behaviour may apply to any, a particular subgroup or all visual indication elements provided.

Alternatively or additionally, such a graphical user interface may state, e.g., a current charge of the battery compared to a nominal charge, corresponding to 100%. For example, a user may press a button on the aerosol generating apparatus, in particular in a particular state, e.g., a standby, to which the aerosol generating apparatus may react and display the current charge. To increase the user experience, the aerosol generating apparatus may not merely show a number of illuminated visual indication elements corresponding to a percentage of the current charge but may e.g. provide an animated visualization of the current battery charge. For example, if the battery is at 80%, and assuming that we again have five visual indication elements, they may light up sequentially to a certain visual indication element. In this example, the visual indication elements may sequentially illuminate visual indication element 1 to 4, visual indication element five remains off. Consequently, four of five visual indication elements are which may correspond to indication of a battery charge of the present. To increase visibility, one visual indication element may blank such as direct attention of the user to said indication element. For example, the above example, if visual indication element 4 blinks, this may indicate the aforementioned battery charge.

Alternatively or additionally, a blinking visual indication element indicate a battery charge being in between two adjacent visual indication elements. For example, in the above example, in case visual indication element 4 blinks, this may alternatively correspond to a battery charge of 70%, rather than 80% of nominal battery charge. In other words, each continuously illuminated visual indication element, may correspond to 20% of nominal charge while a blinking visual indication element, may correspond to 10% of nominal charge. Thus, a situation where three visual indication elements 1 to 3 are continuously illuminated would correspond to a battery charge of 60% (20% + 20% + 20%), while the same situation with visual indication element 4 additionally blinking would correspond to a battery charge of 70% (20% + 20% + 20% +10%), and further the same situation with visual indication element 4 additionally the continuously illuminated would correspond to a battery charge of 80% (20% + 20% + 20% + 20%). Similar arrangements are conceivable for all battery charges between 0% and 100%.

Alternatively or additionally, such a graphical user interface may display, e.g., a current charge of the battery compared to a nominal charge, corresponding to 100% during the process of charging. In case of a connected energy source for charging the battery, the current battery charge may be indicated in a similar manner as described previously. For example, again considering five visual indication, elements, visual indication elements 1 to 5 may successively illuminate while each corresponds to 20% of battery charge or energy stored in the battery. During charging, the graphical user interface may thus start with illuminating no visual indication element corresponding to a charge of less than 20%. Subsequently, visual indication element 1 may illuminate to indicate a charge of between 20% and less than 40%, visual indication element 1 and 2 may illuminate to indicate a charge between 40% and less than 60%, visual indication element 1, 2 and 3 may illuminate to indicate a charge between 60% and less than 80%, visual indication element 1, 2, 3 and 4 may illuminate to indicate a charge between 80% and less than 100%, and all five visual indication elements may illuminate to indicate a charge of essentially 100%.

Alternatively or additionally, the graphical user interface may thus start with illuminating no visual indication element corresponding to a charge of less than 10%. Subsequently, visual indication element 1 may illuminate to indicate a charge of between 10% and less than 30%, visual indication element 1 and 2 may illuminate to indicate a charge between 30% and less than 50%, visual indication element 1, 2 and 3 may illuminate to indicate a charge between 50% and less than 70%, visual indication element 1, 2, 3 and 4 may illuminate to indicate a charge between 70% and less than 90%, and all five visual indication elements may illuminate to indicate a charge of 90% to 100%.

Alternatively or additionally, a blinking visual indication element, may indicate a charge of 10% of a certain 20% region. For example, visual indication element 1, 2 and 3 may illuminate to indicate a charge between 60% and less than 70% while a situation where visual indication element 1, 2 and 3 may be illuminated continuously while visual indication element 4 may be blinking may indicate a charge of between 70% and less than 80%. Similar arrangements are conceivable for all battery charges between 0% and 100%.

Additionally or alternatively, visual indication elements being able to assume different brightness levels or colours may be used to further differentiate within a particular value range. For example, a certain time range, e.g., one minute, may be subdivided by two, three, four, five, six, ten or twelve different brightness levels or different colours to indicate subdivisions in 30 seconds, 20 seconds, 15 seconds, 12 seconds, 10 seconds, 6 seconds or 5 seconds. Likewise, 20% of relative battery charge may be subdivided by two or four different brightness levels or different colours to indicate subdivisions in 10% or 5% of relative battery charge per visual indication element.

The use of individual visual indication elements to show the passage of time or a percentage of battery power may have several advantages. Visual indication elements may provide clear and immediate visual feedback. Different colours or blinking patterns may indicate different time intervals or statuses, making conveyed information easy to understand even from a distance. Visual indication elements such as LEDs can have favourable energy efficiency characteristics. They may consume less power than other lighting technologies, making them suitable for battery-powered devices or applications where power conservation is important. Visual indication elements may be small and easy to integrate into different designs and spaces. This may enable flexible and creative ways of displaying time, for example in portable devices. Visual indication elements may have a long lifespan and be shock resistant, which may make them suitable for applications in different environments, including outdoors or in harsh conditions. In addition, visual indication elements may be programmed to display time in different formats and sequences, providing versatility in design. This may include countdowns or progress bars. The cost of visual indication elements may make them an economical choice for both large projects and consumer electronics. Visual indication elements may be customised in terms of colour, brightness and flashing patterns to suit specific needs or aesthetic preferences, thereby enhancing the user experience. For users with hearing impairments or in noisy environments, visual indication elements may be more accessible than audible alarms or warnings. They may also be highly visible in bright sunlight or darkness, making them suitable for outdoor devices and other portable electronics.

In the context of this disclosure, select mathematical functions are used, which are defined in the following:
The "quotient" function returns the integer part of the result of a division, discarding any remainder (also known as the floor division result). Thus, the quotient of two numbers is the result of the division operation where only the integer part of the division is considered (i.e., the result is rounded down to the nearest integer).

The "round" function returns the nearest integer to a given number. If the number is equidistant from two integers, it typically rounds to the nearest even integer. Thus, the round function returns the nearest integer to a given number. If the fractional part of the number is 0.5 or greater, the number may be rounded up; otherwise, it may be rounded down.

The "remainder" function returns the remaining part of the division of two numbers, after the quotient has been extracted. The remainder is the part of the dividend that is left over after division when the divisor does not divide the dividend exactly. It is the result of the modulo operation.

According to an exemplary embodiment of the present disclosure, the controller may be configured to illuminate a number k of visual indication elements and wherein k may be quotient $(j\times n/m)$ or k may be round $(j\times n/m)$.

The aerosol generating apparatus is thus arranged to illuminate all visual indication elements, in case the number of remaining aerosol generating sessions that can be supported by the current charge of the battery equals the number of aerosol generating sessions that can be accommodated by the battery, its total battery capacity, and/or the number of aerosol generating sessions that the battery is intended to accommodate maximally.

At the same token, in case the remaining battery capacity is able to support only a number of aerosol generating sessions lower than the predefined number of aerosol generating sessions, the visual indication elements may indicate this situation to a user accordingly. The function (quotient $(j\times n/m)$) may be seen as a function returning the integer part of the division, while the function (round $(j\times n/m)$ may be seen as a conventional rounding function. For example, for the division of n=24 and j=5, thus 24/5=4,8, the function (quotient (24/5)) may return the value 4, while the function (round (24/5) may return the value 5.

According to a further exemplary embodiment of the present disclosure, at least one of the plurality of visual indication elements may be arranged to illuminate at a plurality of different illumination levels, and wherein the controller may be configured to illuminate said at least one visual indication element at a level corresponding to the remainder $(j\times n/m)$.

The visual indication elements may thus illuminate using different brightness levels to indicate different values of remaining aerosol generating sessions. For example, in case the visual indication elements may be arranged to illuminate six different brightness levels (e.g., 0%, 20%, 40%, 60%, 80% and 100%), the number of remaining aerosol generating sessions may be displayed with higher accuracy and granularity. For example, for the division of n=24 and j=5, thus 24/5=4,8, the function (remainder (24/5)) may return the value 0,8 as the remainder of 4,8. Therefore, one visual indication element may illuminate with a brightness level of 80%.

Generally, the visual indication elements may be capable to be illuminated with a brightness level that may be arranged continuously between fully on and fully off, and set to a specific brightness level depending on the result of the mathematical function. E.g., the number of different illumination levels may be a defined, in particular preset and aerosol generating apparatus dependent number of levels, e.g., m/j.

According to a further exemplary embodiment of the present disclosure, the number of different illumination levels may be equal to (m/j), wherein optionally m and j are selected such that (m/j) is a natural number, for example (m/j) = (2 or 3 or 4 or 5 or 6).

Thereby, a dedicated one of the plurality of visual indication elements may be used to indicate the remaining smoking sessions with suitable granularity. For example, the visual indication element associated with the highest number of remaining aerosol generating sessions, i.e., that visual indication element that is designed to first stop illumination when counting down the number of remaining aerosol generating sessions may be configured to be illuminated at a level corresponding the function (remainer $(j \times n/m)$). That way, the first visual indication elements that would go out when counting down the remaining aerosol generating sessions would be re-enabled in accordance with the respective remainder to successively lower its illumination level depending on said remainder only to repeat its pattern once a further one of the visual indication elements turns dark. Likewise, it is conceivable that more than one or all of the available visual indication elements are able to illuminate at levels corresponding to the function (remainer $(j \times n/m)$).

According to a further exemplary embodiment of the present disclosure, j may be (4 or 5 or 6 or 10) and/or m may be 8 or 10 or 12 or 15 or 16 or 18 or 20 or 24 or 25 or 30 or 36).

Providing an arrangement where the respective variables are corresponding to the indicated values allows implementing a simple and user-friendly visualization of remaining available aerosol generating sessions to a user.

According to a further exemplary embodiment of the present disclosure, the controller may further configured to initiate an aerosol generating session having a predetermined total duration time t, and, when initiated, the controller may be configured to determine the remaining duration time t1 of the aerosol generating session, and wherein the controller may be configured to control the visual indication elements to indicate the remaining duration time t1.

According to a further exemplary embodiment of the present disclosure, the method may comprise the steps initiate an aerosol generating session having a predetermined total duration time t, and, when initiated, determine the remaining duration time t1 of the aerosol generating session, and control the visual indication elements to indicate the remaining duration time t1.

According to a further exemplary embodiment of the present disclosure, the controller may be configured to illuminate a number c of visual indication elements representative of the remaining duration time t1 of the aerosol generating session, and wherein c = quotient $(j \times t1/t) + 1$ if $0 < t1 < t$, and c may be j if $t1 = t$, and c may be 0 if $t1 = 0$; or wherein c = quotient $(j \times (1-t1/t))$ if $0 \leq t1 \leq t$; or wherein c = round $(j \times t1/t)$; or wherein c = round $(j \times (1-t1/t))$.

Additionally to indicating a remaining battery capacity related to the remaining aerosol generating sessions available to a user, the aerosol generating apparatus may be arranged, during a dedicated aerosol generating session or smoking session to indicate the time remaining during said smoking session to the user. Being evenly divided visible by the number of visual indication elements may be understood when considering the total duration time in seconds or minutes. E.g., a total duration time of a smoking session of five minutes is evenly divisible in case the aerosol generating apparatus comprises five visual indication elements. Thereby, each visual indication element corresponds to one minute of the smoking session. Likewise, in case a total duration time of a smoking session is 300 seconds, the total duration may be divisible by said exemplary five visible indication elements so that each visible indication element corresponds to 60 seconds of the smoking session. Other values for the total duration time and the number of visual indication elements is conceivable.

For example, in case the aerosol generating apparatus comprises j=5 visual indication elements, and a total duration time of a smoking session is 300 seconds/5 minutes, the number c of illuminated visual indication elements at the starting time of the smoking session t1=t would be quotient $(5*300/300) = 5$. Likewise, one second in the smoking session, where t1 = 299 seconds, the number of illuminated visual indication elements would be [quotient $(5* 299/300)] + 1 = 4 + 1 = 5$. Further, 61 seconds into the smoking session, where t1 = 239 seconds, the number of illuminated visual indication elements would be the [quotient $(5* 239/300)] + 1 = 3 + 1 = 4$.

Further, a function comprising the term $(j \times t1/t)$ may be seen as counting down, while a function comprising the term $(j \times (1-t1)/t)$ may be seen as counting up the illumination of the visual indication elements.

According to a further exemplary embodiment of the present disclosure, at least one of the plurality of visual indication elements may be arranged to illuminate at a plurality of different illumination levels, and wherein the controller may be configured to illuminate said at least one visual indication element at a level corresponding to the remainder $(j \times t1/t)$.

Thereby, in addition to counting down or counting up, the remaining duration of a smoking session in increments corresponding to the number of available visual indication elements, a more granular indication of the remaining duration time may be provided to a user. By using the remainder function and visual indication elements that are configured to be illuminated at different levels, the granularity may be increased, at least by the different illumination levels. For example, in the above example, in case a visual indication element may be illuminated in 10 different levels, a granularity of six seconds may be achievable. In case a visual indication element may be illuminated in six different brightness levels, a granularity of 10 seconds may be achievable.

According to a further exemplary embodiment of the present disclosure, the controller may be configured to illuminate a number c of visual indication elements representative of the remaining duration time t1 of the aerosol generating session, wherein c = quotient $(j \times t\_1/t)$, and wherein the controller may be configured to contrastingly illuminate a further visual indication element if $t1 > 0$.

According to a further exemplary embodiment of the present disclosure, the controller may be configured to illuminate intermittently one visual indication element of a particular number of visual indication elements to be illuminated.

In this scenario, instead of illuminating a further visual indication element at different levels to indicate the remainder, a further visual indication element is illuminated differently by blinking, i.e., being switched on and off successively. The blinking may be in a single defined manner, i.e., having an on phase of 50%, an off phase of 50%, or may be a sliding scale of on and off phases depending on the specific value of the remainder.

The blinking visual indication element may be a particular visual indication element, e.g., the visual indication element that turns off the first, or may be a variable visual indication element, e.g., the visual indication element that turned off last. In the latter scenario, the blinking visual indication element is changing with progression through the sequence, whereas in the first scenario, the blinking visual indication element remains the same visual indication element.

According to a further exemplary embodiment of the present disclosure, the controller, during charging, may be configured to illuminate a number of visual indication elements dependent on the current battery capacity, and wherein each visual indication element may correspond to 100 x 1/j % of the total battery capacity.

According to a further exemplary embodiment of the present disclosure, the method may comprise the step illuminate, during charging, a number of visual indication elements (57) dependent on the current battery capacity, wherein each visual indication element (57) may correspond to 100 x 1/j % of the total battery capacity.

Specifically, the conditions for the illumination, e.g. the condition when a visual indication element is or is not illuminated may depend on the current battery capacity, i.e., the energy currently stored in the battery, entering or leaving a defined percentage zone associated with a particular visual indication element. E.g. a visual indication element may be illuminated or remain illuminated when the battery capacity enters its percentage zone, or alternatively may not be illuminated or may not be illuminated anymore when the battery capacity leaves said percentage zone. Still alternatively, the visual indication element may switch or alternate between illuminated and not illuminated when the battery capacity is e.g. half through a particular percentage zone. A particular percentage zone may e.g., correlate to 100 x $1/j$ % of the total battery capacity.

Additionally or alternatively, the visual indication elements may be indicating a current charge of the battery or in other words, a current battery capacity during charging. Thereby, the increase in energy stored in the battery is visualized to a user. The visualization of the current battery charge may correspond to the number of available visual indication elements being illuminated or not, and optionally visual indication elements being illuminated in an intermittent or blinking manner and for visual indication elements being related at different brightness levels. Thereby, the visualization of the current battery charge may be provided to a user with fine granularity.

According to a further exemplary embodiment of the present disclosure, j may be 5.

5 may be a number particularly suitable for indicating a remaining number of available smoking sessions and at the same time indicating a remaining time of smoking sessions.

The preceding summary is provided for purposes of summarizing some examples to provide a basic understanding of aspects of the subject matter described herein. Accordingly, the above-described features should not be construed to narrow the scope or spirit of the subject matter described herein in any way. Moreover, the above and/or proceeding examples may be combined in any suitable combination to provide further examples, except where such a combination is clearly impermissible or expressly avoided. Other features, aspects, and advantages of the subject matter described herein will become apparent from the following text and the accompanying drawings.

## BRIEF DESCRIPTION OF THE FIGURES

Aspects, features and advantages of the present disclosure will become apparent from the following description of examples in reference to the appended drawings in which like numerals denote like elements.

Fig. 1 is a block system diagram showing an example aerosol generating apparatus.

Fig. 2 is a block system diagram showing an example implementation of the apparatus of Fig. 1, where the aerosol generating apparatus is configured to generate aerosol from a liquid precursor.

Figs. 3A and 3B are schematic diagrams showing an example implementation of the apparatus of Fig. 2.

Fig. 4 is a block system diagram showing an example implementation of the apparatus of Fig. 1, where the aerosol generating apparatus is configured to generate aerosol from a solid precursor.

Fig. 5 is a schematic diagram showing an example implementation of the apparatus of Fig. 4.

Fig. 6 is a block system diagram showing an example system for managing an aerosol generating apparatus.

Fig. 7 is an overview of a user interface interaction according to an embodiment of the present disclosure.

**Fig. 8** is an overview of a user interface interaction according to a further embodiment of the present disclosure.

**Fig. 9** is an overview of a user interface interaction according to a further embodiment of the present disclosure.

**Fig. 10** is a flowchart of a method of operating an aerosol generating apparatus according to an embodiment of the present disclosure.

## DETAILED DESCRIPTION OF EMBODIMENTS

Before describing several examples implementing the present disclosure, it is to be understood that the present disclosure is not limited by specific construction details or process steps set forth in the following description and accompanying drawings. Rather, it will be apparent to those skilled in the art having the benefit of the present disclosure that the systems, apparatuses and/or methods described herein could be embodied differently and/or be practiced or carried out in various alternative ways.

Unless otherwise defined herein, scientific and technical terms used in connection with the presently disclosed inventive concept(s) shall have the meanings that are commonly understood by those of ordinary skill in the art, and known techniques and procedures may be performed according to conventional methods well known in the art and as described in various general and more specific references that may be cited and discussed in the present specification.

Any patents, published patent applications, and non-patent publications mentioned in the specification are hereby incorporated by reference in their entirety.

All examples implementing the present disclosure can be made and executed without undue experimentation in light of the present disclosure. While particular examples have been described, it will be apparent to those of skill in the art that variations may be applied to the systems, apparatus, and/or methods and in the steps or in the sequence of steps of the methods described herein without departing from the concept, spirit, and scope of the inventive concept(s). All such similar substitutions and modifications apparent to those skilled in the art are deemed to be within the spirit, scope, and concept of the inventive concept(s) as defined by the appended claims.

The use of the term "a" or "an" in the claims and/or the specification may mean "one," as well as "one or more," "at least one," and "one or more than one." As such, the terms "a," "an," and "the," as well as all singular terms, include plural referents unless the context clearly indicates otherwise. Likewise, plural terms shall include the singular unless otherwise required by context.

The use of the term "or" in the present disclosure (including the claims) is used to mean an inclusive "and/or" unless explicitly indicated to refer to alternatives only or unless the alternatives are mutually exclusive. For example, a condition "A or B" is satisfied by any of the following: A is true (or present) and B is false (or not present), A is false (or not present) and B is true (or present), and both A and B are true (or present).

As used in this specification and claim(s), the words "comprising, "having," "including," or "containing" (and any forms thereof, such as "comprise" and "comprises," "have" and "has," "includes" and "include," or "contains" and "contain," respectively) are inclusive or open-ended and do not exclude additional, unrecited elements or method steps.

Unless otherwise explicitly stated as incompatible, or the physics or otherwise of the embodiments, examples, or claims prevent such a combination, the features of examples disclosed herein, and of the claims, may be integrated together in any suitable arrangement, especially ones where there is a beneficial effect in doing so. This is not limited to only any specified benefit, and instead may arise from an "ex post facto" benefit. This is to say that the combination of features is not limited by the described forms, particularly the form (e.g. numbering) of example(s), embodiment(s), or dependency of claim(s). Moreover, this also applies to the phrase "in one embodiment," "according to an embodiment," and the like, which are merely a stylistic form of wording and are not to be construed as limiting the following features to a separate embodiment to all other instances of the same or similar wording. This is to say, a reference to 'an,' 'one,' or 'some' embodiment(s) may be a reference to any one or more, and/or all embodiments, or combination(s) thereof, disclosed. Also, similarly, the reference to "the" embodiment may not be limited to the immediately preceding embodiment. Further, all references to one or more embodiments or examples are to be construed as non-limiting to the claims.

The present disclosure may be better understood in view of the following explanations, wherein the terms used that are separated by "or" may be used interchangeably:

As used herein, an "**aerosol generating apparatus**" (or "**electronic(e)-cigarette**") may be an apparatus configured to deliver an aerosol to a user for inhalation by the user. The apparatus may additionally/alternatively be referred to as a "smoking substitute apparatus", if it is intended to be used instead of a conventional combustible smoking article. As used herein a combustible "smoking article" may refer to a cigarette, cigar, pipe or other article, that produces smoke (an aerosol comprising solid particulates and gas) via heating above the thermal decomposition temperature (typically by combustion and/or pyrolysis). An aerosol generated by the apparatus may comprise an aerosol with particle sizes of 0.2 - 7 microns, or less than 10 microns, or less than 7 microns. This particle size may be achieved by control of one or more of: heater temperature; cooling rate as the vapour condenses to an aerosol; flow properties including turbulence and velocity. The generation of aerosol by the aerosol generating apparatus may be controlled by an input device. The input device may be configured to be user-activated, and may for example include or take the form of an actuator (e.g. actuation button) and/or an airflow sensor.

Each occurrence of the aerosol generating apparatus being caused to generate aerosol for a period of time (which may be variable) may be referred to as an "**activation**" of the aerosol generating apparatus. The aerosol generating apparatus may be arranged to allow an amount of aerosol delivered to a user to be varied per activation (as opposed to delivering a fixed dose of aerosol), e.g. by activating an aerosol generating unit of the apparatus for a variable amount of time, e.g. based on the strength/duration of a draw of a user through a flow path of the apparatus (to replicate an effect of smoking a conventional combustible smoking article).

The aerosol generating apparatus may be portable. As used herein, the term "**portable**" may refer to the apparatus being for use when held by a user.

As used herein, an "**aerosol generating system**" may be a system that includes an aerosol generating apparatus and optionally other circuitry/components associated with the function of the apparatus, e.g. one or more external devices and/or one or more external components (here "external" is intended to mean external to the aerosol generating apparatus).

As used herein, an "**external device**" and "**external component**" may include one or more of a: a charging device, a mobile device (which may be connected to the aerosol generating apparatus, e.g. via a wireless or wired connection); a networked-based computer (e.g. a remote server); a cloud-based computer; any other server system.

An example aerosol generating system may be a system for managing an aerosol generating apparatus. Such a system may include, for example, a mobile device, a network server, as well as the aerosol generating apparatus.

As used herein, an "**aerosol**" may include a suspension of precursor, including as one or more of: solid particles; liquid droplets; gas. Said suspension may be in a gas including air. An aerosol herein may generally refer to/include a vapour. An aerosol may include one or more components of the precursor.

As used herein, a "**precursor**" may include one or more of a: liquid; solid; gel; loose leaf material; other substance. The precursor may be processed by an aerosol generating unit of an aerosol generating apparatus to generate an aerosol. The precursor may include one or more of: an active component; a carrier; a flavouring. The active component may include one or more of nicotine; caffeine; a cannabidiol oil; a non-pharmaceutical formulation, e.g. a formulation which is not for treatment of a disease or physiological malfunction of the human body. The active component may be carried by the carrier, which may be a liquid, including propylene glycol and/or glycerine. The term "flavouring" may refer to a component that provides a taste and/or a smell to the user. The flavouring may include one or more of: Ethylvanillin (vanilla); menthol, Isoamyl acetate (banana oil); or other. The precursor may include a substrate, e.g. reconstituted tobacco to carry one or more of the active component; a carrier; a flavouring.

As used herein, a "**storage portion**" may be a portion of the apparatus adapted to store the precursor. It may be implemented as fluid-holding reservoir or carrier for solid material depending on the implementation of the precursor as defined above.

As used herein, a "**flow path**" may refer to a path or enclosed passageway through an aerosol generating apparatus, e.g. for delivery of an aerosol to a user. The flow path may be arranged to receive aerosol from an aerosol generating unit. When referring to the flow path, upstream and downstream may be defined in respect of a direction of flow in the flow path, e.g. with an outlet being downstream of an inlet.

As used herein, a "**delivery system**" may be a system operative to deliver an aerosol to a user. The delivery system may include a mouthpiece and a flow path.

As used herein, a "**flow**" may refer to a flow in a flow path. A flow may include aerosol generated from the precursor. The flow may include air, which may be induced into the flow path via a puff by a user.

As used herein, a "**puff**" (or "**inhale**" or "**draw**") by a user may refer to expansion of lungs and/or oral cavity of a user to create a pressure reduction that induces flow through the flow path.

As used herein, an "**aerosol generating unit**" may refer to a device configured to generate an aerosol from a precursor. The aerosol generating unit may include a unit to generate a vapour directly from the precursor (e.g. a heating system or other system) or an aerosol directly from the precursor (e.g. an atomiser including an ultrasonic system, a flow expansion system operative to carry droplets of the precursor in the flow without using electrical energy or other system). A plurality of aerosol generating units to generate a plurality of aerosols (for example, from a plurality of different aerosol precursors) may be present in an aerosol generating apparatus.

As used herein, a "**heating system**" may refer to an arrangement of at least one heating element, which is operable to aerosolise a precursor once heated. The at least one heating element may be electrically resistive to produce heat from the flow of electrical current therethrough. The at least one heating element may be arranged as a susceptor to produce heat when penetrated by an alternating magnetic field. The heating system may be configured to heat a precursor to below 300 or 350 degrees C, including without combustion.

As used herein, a "**consumable**" may refer to a unit that includes a precursor. The consumable may include an aerosol generating unit, e.g. it may be arranged as a cartomizer. The consumable may include a mouthpiece. The consumable may include an information carrying medium. With liquid or gel implementations of the precursor, e.g. an e-liquid, the consumable may be referred to as a "capsule" or a "pod" or an "e-liquid consumable". The capsule/pod may include a storage portion, e.g. a reservoir or tank, for storage of the precursor. With solid material implementations of the precursor, e.g. tobacco or reconstituted tobacco formulation, the consumable may be referred to as a "stick" or "package" or "heat-not-burn consumable". In a heat-not-burn consumable, the mouthpiece may be implemented as a filter and the consumable may be arranged to carry the precursor. The consumable may be implemented as a dosage or pre-portioned amount of material, including a loose-leaf product.

As used herein, an "**information carrying medium**" may include one or more arrangements for storage of information on any suitable medium. Examples include: a computer readable medium; a Radio Frequency Identification (RFID) transponder; codes encoding information, such as optical (e.g. a bar code or QR code) or mechanically read codes (e.g. a configuration of the absence or presents of cutouts to encode a bit, through which pins or a reader may be inserted).

As used herein "**heat-not-burn**" (or "**HNB**" or "**heated precursor**") may refer to the heating of a precursor, typically tobacco, without combustion, or without substantial combustion (i.e. localised combustion may be experienced of limited portions of the precursor, including of less than 5% of the total volume).

As used herein, "**electrical circuitry**" may refer to one or more electrical components, examples of which may include: an Application Specific Integrated Circuit (ASIC); electronic/electrical componentry (which may include combinations of transistors, resistors, capacitors, inductors etc); one or more processors; a non-transitory memory (e.g. implemented by one or more memory devices), that may store one or more software or firmware programs; a combinational logic circuit; interconnection of the aforesaid. The electrical circuitry may be located entirely at the apparatus, or distributed between the apparatus and/or on one or more external devices in communication with the apparatus, e.g. as part of a system.

As used herein, a "**processing resource**" (or "**processor**" or "**controller**") may refer to one or more units for processing data, examples of which may include an ASIC, microcontroller, FPGA, microprocessor, digital signal processor (DSP) capability, state machine or other suitable component. A processing resource may be configured to execute a computer program, e.g. which may take the form of machine-readable instructions, which may be stored on a non-transitory memory and/or programmable logic. The processing resource may have various arrangements corresponding to those discussed for the circuitry, e.g. on-board and/or off board the apparatus as part of the system. As used herein, any machine executable instructions, or computer readable media, may be configured to cause a disclosed method to be carried out, e.g. by an aerosol generating apparatus or system as disclosed herein, and may therefore be used synonymously with the term method.

As used herein, an "**external device**" (or "**peripheral device**") may include one or more electronic components external to an aerosol generating apparatus. Those components may be arranged at the same location as the aerosol generating apparatus or remote from the apparatus. An external device may comprise electronic computer devices including: a smartphone; a PDA; a video game controller; a tablet; a laptop; or other like device.

As used herein, a "**computer readable medium/media**" (or "**memory**" or "**data storage**") may include any medium capable of storing a computer program, and may take the form of any conventional non-transitory memory, for example one or more of: random access memory (RAM); a CD; a hard drive; a solid-state drive; a memory card; a DVD. The memory may have various arrangements corresponding to those discussed for the circuitry /processor. The present disclosure includes a computer readable medium configured to cause an apparatus or system disclosed herein to perform a method as disclosed herein.

As used herein, a "**communication resource**" (or "**communication interface**") may refer to hardware and/or firmware for electronic information/data transfer. The communication resource may be configured for wired communication ("wired communication resources") or wireless communication ("wireless communication resource"). Wireless communication resources may include hardware to transmit and receive signals by radio and may include various protocol implementations e.g. the 802.11 standard described in the Institute of Electronics Engineers (IEEE) and Bluetooth™ from the Bluetooth Special Interest Group of Kirkland Wash. Wired communication resources may include; Universal Serial Bus (USB); High-Definition Multimedia Interface (HDMI) or other protocol implementations. The apparatus may include communication resources for wired or wireless communication with an external device.

As used herein, a "**network**" (or "**computer network**") may refer to a system for electronic information/data transfer between a plurality of apparatuses/devices. The network may, for example, include one or more networks of any type, which may include: a Public Land Mobile Network (PLMN); a telephone network (e.g. a Public Switched Telephone Network (PSTN) and/or a wireless network); a local area network (LAN); a metropolitan area network (MAN); a wide area network (WAN); an Internet Protocol Multimedia Subsystem (IMS) network; a private network; the Internet; an intranet.

It will be appreciated that any of the disclosed methods (or corresponding apparatuses, programs, data carriers, etc.) may be carried out by either a host or client, depending on the specific implementation (i.e. the disclosed methods/apparatuses are a form of communication(s), and as such, may be carried out from either 'point of view', i.e. in corresponding to each other fashion). Furthermore, it will be understood that the terms "receiving" and "transmitting" encompass "inputting" and "outputting" and are not limited to an RF context of transmitting and receiving electromagnetic (e.g. radio) waves. Therefore, for example, a chip or other device or component for realizing embodiments could generate data for output to another chip, device or component, or have as an input data from another chip, device, or component, and such an output or input could be referred to as "transmit" and "receive" including gerund forms, that is, "transmitting" and "receiving," as well as such "transmitting" and "receiving" within an RF context.

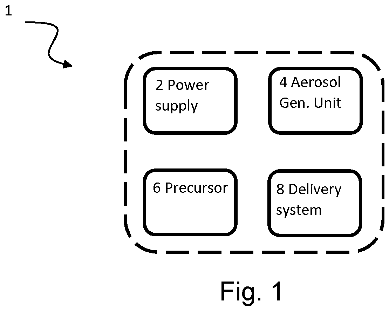

Referring to Fig. 1, an example aerosol generating apparatus 1 includes a power supply 2, for supply of electrical energy. The apparatus 1 includes an aerosol generating unit 4 that is driven by the power supply 2. The power supply 2 may include an electric power supply in the form of a battery and/or an electrical connection to an external power source. The apparatus 1 includes a precursor 6, which in use is aerosolised by the aerosol generating unit 4 to generate an aerosol. The apparatus 2 includes a delivery system 8 for delivery of the aerosol to a user.

Electrical circuitry (not shown in Fig. 1) may be implemented to control the interoperability of the power supply 4 and aerosol generating unit 6.

In variant examples, which are not illustrated, the power supply 2 may be omitted since, e.g. an aerosol generating unit implemented as an atomiser with flow expansion may not require a power supply.

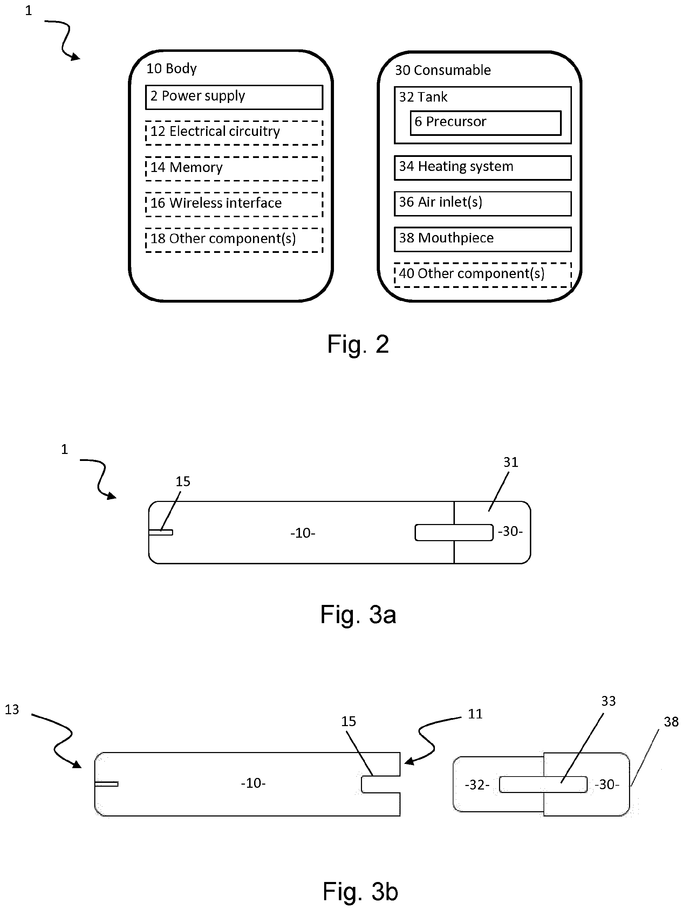

[Fig. 2 (generically) and Figs. 3A-B (specifically) set out an E-liquid system implementation of Fig. 1][If the invention is not suitable for an E-liquid system then Figs. 2 and 3 and the associated text needs deleting]

Fig. 2 shows an implementation of the apparatus 1 of Fig. 1, where the aerosol generating apparatus 1 is configured to generate aerosol from a liquid precursor.

In this example, the apparatus 1 includes a device body 10 and a consumable 30.

In this example, the body 10 includes the power supply 4. The body may additionally include any one or more of electrical circuitry 12, a memory 14, a wireless interface 16, one or more other components 18.

The electrical circuitry 12 may include a processing resource for controlling one or more operations of the body 10 and consumable 30, e.g. based on instructions stored in the memory 14.

The wireless interface 16 may be configured to communicate wirelessly with an external (e.g. mobile) device, e.g. via Bluetooth.

The other component(s) 18 may include one or more user interface devices configured to convey information to a user and/or a charging port, for example (see e.g. Fig. 3).

The consumable 30 includes a storage portion implemented here as a tank 32 which stores the liquid precursor 6 (e.g. e-liquid). The consumable 30 also includes a heating system 34, one or more air inlets 36, and a mouthpiece 38. The consumable 30 may include one or more other components 40.

The body 10 and consumable 30 may each include a respective electrical interface (not shown) to provide an electrical connection between one or more components of the body 10 with one or more components of the consumable 30. In this way, electrical power can be supplied to components (e.g. the heating system 34) of the consumable 30, without the consumable 30 needing to have its own power supply.

In use, a user may activate the aerosol generating apparatus 1 when inhaling through the mouthpiece 38, i.e. when performing a puff. The puff, performed by the user, may initiate a flow through a flow path in the consumable 30 which extends from the air inlet(s) 34 to the mouthpiece 38 via a region in proximity to the heating system 34.

Activation of the aerosol generating apparatus 1 may be initiated, for example, by an airflow sensor in the body 10 which detects airflow in the aerosol generating apparatus 1 (e.g. caused by a user inhaling through the mouthpiece), or by actuation of an actuator included in the body 10. Upon activation, the electrical circuitry 12 (e.g. under control of the processing resource) may supply electrical energy from the power supply 2 to the heating system 34 which may cause the heating system 32 to heat liquid precursor 6 drawn from the tank to produce an aerosol which is carried by the flow out of the mouthpiece 38.

In some examples, the heating system 34 may include a heating filament and a wick, wherein a first portion of the wick extends into the tank 32 in order to draw liquid precursor 6 out from the tank 32, wherein the heating filament coils around a second portion of the wick located outside the tank 32. The heating filament may be configured to heat up liquid precursor 6 drawn out of the tank 32 by the wick to produce the aerosol.

In this example, the aerosol generating unit 4 is provided by the above-described heating system 34 and the delivery system 8 is provided by the above-described flow path and mouthpiece 38.

In variant embodiments (not shown), any one or more of the precursor 6, heating system 34, air inlet(s) 36 and mouthpiece 38, may be included in the body 10. For example, the mouthpiece 36 may be included in the body 10 with the precursor 6 and heating system 32 arranged as a separable cartomizer.

Figs. 3A and 3B show an example implementation of the aerosol generating device 1 of Fig. 2. In this example, the consumable 30 is implemented as a capsule/pod, which is shown in Fig. 3A as being physically coupled to the body 10, and is shown in Fig. 3B as being decoupled from the body 10.

In this example, the body 10 and the consumable 30 are configured to be physically coupled together by pushing the consumable 30 into an aperture in a top end 11 the body 10, with the consumable 30 being retained in the aperture via an interference fit.

In other examples (not shown), the body 10 and the consumable 30 could be physically coupled together in other ways, e.g. by screwing one onto the other, through a bayonet fitting, or through a snap engagement mechanism, for example.

The body 10 also includes a charging port (not shown) at a bottom end 13 of the body 10.

The body 10 also includes a user interface device configured to convey information to a user. Here, the user interface device is implemented as a light 15, which may e.g. be configured to illuminate when the apparatus 1 is activated. Other user interface devices are possible, e.g. to convey information haptically or audibly to a user.

In this example, the consumable 30 has an opaque cap 31, a translucent tank 32 and a translucent window 33. When the consumable 30 is physically coupled to the body 10 as shown in Fig. 3A, only the cap 31 and window 33 can be seen, with the tank 32 being obscured from view by the body 10. The body 10 includes a slot 15 to accommodate the window 33. The window 33 is configured to allow the amount of liquid precursor 6 in the tank 32 to be visually assessed, even when the consumable 30 is physically coupled to the body 10.

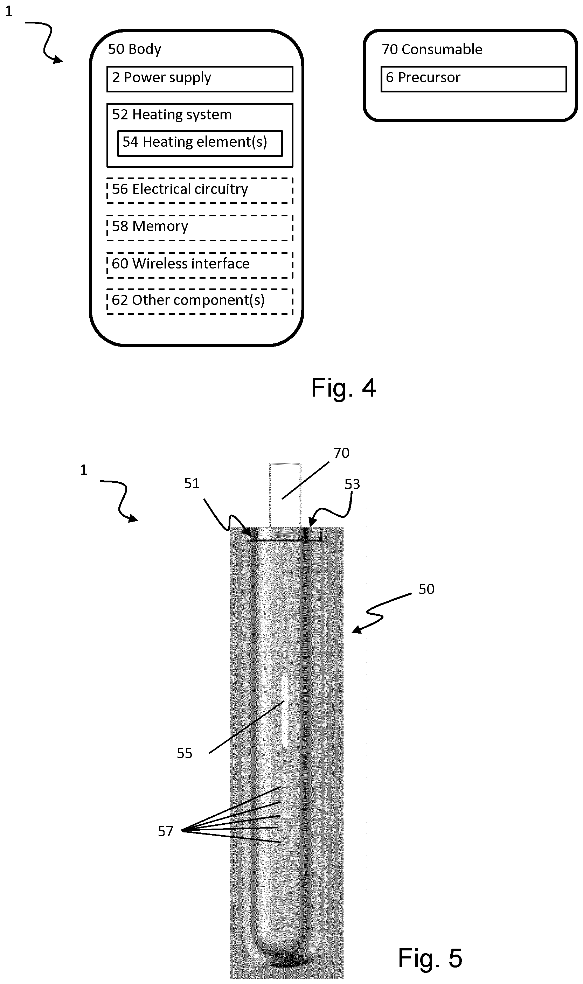

[Fig. 4 (generically) and Fig. 5 (specifically) set out a heat-not-burn implementation of Fig. 1] [If the invention is not suitable for a heat not burn system then Figs. 4 and 5 and the associated text needs deleting]

Fig. 4 shows an implementation of the apparatus 1 of Fig. 1, where the aerosol generating apparatus 1 is configured to generate aerosol by a-heat not-burn process.

In this example, the apparatus 1 includes a device body 50 and a consumable 70.

In this example, the body 50 includes the power supply 4 and a heating system 52. The heating system 54 includes at least one heating element 54. The body may additionally include any one or more of electrical circuitry 56, a memory 58, a wireless interface 60, one or more other components 62.

The electrical circuitry 56 may include a processing resource for controlling one or more operations of the body 50, e.g. based on instructions stored in the memory 58.

The wireless interface 60 may be configured to communicate wirelessly with an external (e.g. mobile) device, e.g. via Bluetooth.

The other component(s) 62 may include an actuator, one or more user interface devices configured to convey information to a user and/or a charging port, for example (see e.g. Fig. 5).

The body 50 is configured to engage with the consumable 70 such that the at least one heating element 54 of the heating system 52 penetrates into the solid precursor 6 of the consumable. In use, a user may activate the aerosol generating apparatus 1 to cause the heating system 52 of the body 50 to cause the at least one heating element 54 to heat the solid precursor 6 of the consumable (without combusting it) by conductive heat transfer, to generate an aerosol which is inhaled by the user.

Fig. 5 shows an example implementation of the aerosol generating device 1 of Fig. 4.

As depicted in Fig. 5, the consumable 70 is implemented as a stick, which is engaged with the body 50 by inserting the stick into an aperture at a top end 53 of the body 50, which causes the at least one heating element 54 of the heating system 52 to penetrate into the solid precursor 6.

The consumable 70 includes the solid precursor 6 proximal to the body 50, and a filter distal to the body 50. The filter serves as the mouthpiece of the consumable 70 and thus the apparatus 1 as a whole. The solid precursor 6 may be a reconstituted tobacco formulation.

In this example, the at least one heating element 54 is a rod-shaped element with a circular transverse profile. Other heating element shapes are possible, e.g. the at least one heating element may be blade-shaped (with a rectangular transverse profile) or tube-shaped (e.g. with a hollow transverse profile).

In this example, the body 50 includes a cap 51. In use the cap 51 is engaged at a top end 53 of the body 50. Although not apparent from Fig. 5, the cap 51 may be moveable relative to the body 50. In particular, the cap 51 is slidable and can slide along a longitudinal axis of the body 50.

The body 50 also includes an actuator 55 on an outer surface of the body 50. In this example, the actuator 55 has the form of a button.

The body 50 also includes a user interface device configured to convey information to a user. Here, the user interface device is implemented as a plurality of lights 57, which may e.g. be configured to illuminate when the apparatus 1 is activated and/or to indicate a charging state of the power supply 4. Other user interface devices are possible, e.g. to convey information haptically or audibly to a user.

The body may also include an airflow sensor which detects airflow in the aerosol generating apparatus 1 (e.g. caused by a user inhaling through the consumable 70). This may be used to count puffs, for example.

In this example, the consumable 70 includes a flow path which transmits aerosol generated by the at least one heating element 54 to the mouthpiece of the consumable.

In this example, the aerosol generating unit 4 is provided by the above-described heating system 52 and the delivery system 8 is provided by the above-described flow path and mouthpiece of the consumable 70.

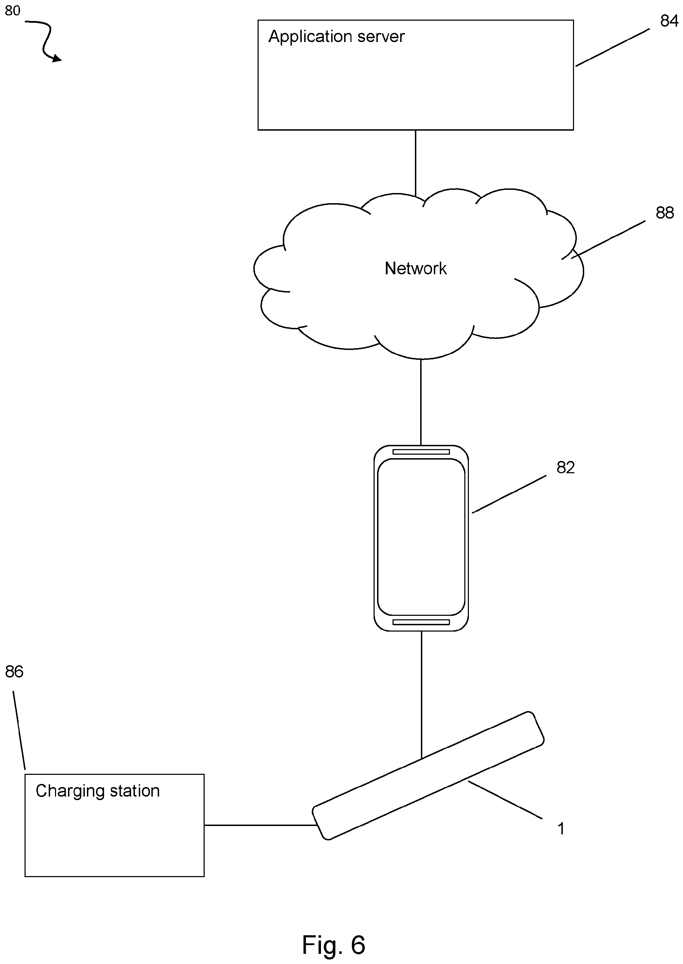

Fig. 6 shows an example system 80 for managing an aerosol generating apparatus 1, such as those described above with reference to any of Figs. 1-5.

The system 80 as shown in Fig. 1 includes a mobile device 82, an application server 84, an optional charging station 86, as well as the aerosol generating apparatus 1.

In this example, aerosol generating apparatus 1 is configured to communicate wirelessly, e.g. via Bluetooth™, with an application (or "app") installed on the mobile device 2, via a wireless interface included in the aerosol generating apparatus 1 and via a wireless interface included in the mobile device 82. The mobile device 82 may be a mobile phone, for example. The application on the mobile phone is configured to communicate with the application server 84, via a network 88. The application server 84 may utilise cloud storage, for example.

The network 88 may include a cellular network and/or the internet.

In other examples, the aerosol generating apparatus 1 may be configured to communicate with the application server 84 via a connection that does not involve the mobile device 82, e.g. via a narrowband internet of things ("NB-IoT") or satellite connection. In some examples, the mobile device 82 may be omitted from the system 80.

A skilled person would readily appreciate that the mobile device 82 may be configured to communicate via the network 88 according to various communication channels, preferably a wireless communication channel such as via a cellular network (e.g. according to a standard protocol, such as 3G or 4G) or via a WiFi network.

The app installed on the mobile device 82 and the application server 84 may be configured to assist a user with managing their aerosol generating apparatus 1, based on information communicated between the aerosol generating apparatus 1 and the app, information communicated directly between the aerosol generating apparatus 1 and the application server 84, and/or information communicated between the app and the application server 84.

The charging station 86 (if present) may be configured to charge (and optionally communicate with) the aerosol generating apparatus 1, via a charging port on the aerosol generating apparatus 1. The charging port on the smoking substitute device 10 may be a USB port, for example, which may allow the aerosol generating apparatus 1 to be charged by any USB-compatible device capable of delivering power to the aerosol generating apparatus 1 via a suitable USB cable (in this case the USB-compatible device would be acting as the charging station 86). Alternatively, the charging station could be a docking station specifically configured to dock with the aerosol generating apparatus 1 and charge the aerosol generating apparatus 1 via the charging port on the aerosol generating apparatus 1.

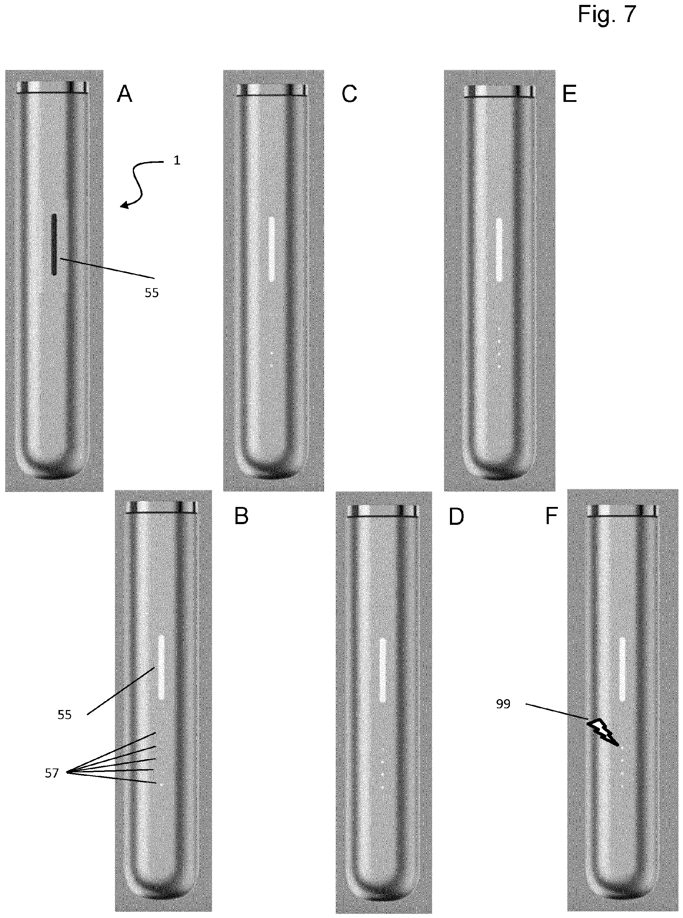

Referring to Fig. 7, which shows overview of a user interface interaction according to an embodiment of the present disclosure.

In Fig. 7, a user interface interaction is shown, which provides information about a current battery capacity to the user. When fully charged, at least to manufacturer specifications, the aerosol generating apparatus, its battery, is capable of providing energy sufficient to power the aerosol generating apparatus for m of aerosol generating sessions. The aerosol generating apparatus comprises a plurality j of individually controllable visual indication elements 57. In the exemplary embodiment of Fig. 7, the aerosol generating apparatus comprises five visual indication elements 57, thus j = 5. The plurality j of individually controllable visual indication elements correspond to a graphical user interface for providing information about the operational status of the aerosol generating apparatus to a user.

Considering Fig. 7A, the aerosol generating apparatus 1 may be in a standby state, as indicated by actuator 55 not being illuminated. A user may thus press the actuator 55 as specified by the manufacturer, e.g. may press the actuator for a defined time period, to initiate that the aerosol generating apparatus shows the current battery capacity or charge state via the user interface to the user. Upon activation by the user, the aerosol generating apparatus 1 may leave the standby state, as indicated by the actuator being illuminated in Fig. 7B. The aerosol generating apparatus 1 may now determine the number n of remaining aerosol generating sessions based on the current battery capacity, or may already have said information available. In order to show the number of remaining aerosol generating sessions that the aerosol generating apparatus may provide before requiring a recharge, the aerosol generating apparatus may subsequently control the plurality of visual indication elements 57 to indicate the number n of remaining aerosol generating sessions. Said information may be provided to the user by illuminating a number k of the visual indication elements, where each of the illuminated k visual indication elements equals to a defined number of remaining aerosol generating sessions. For example, each visual indication element may indicate a number of m/j remaining aerosol generating sessions. E.g., if the total number of aerosol generating sessions the battery can support when fully charged is m = 25, and the number of individually controllable visual indication elements 57 is j = 5, then each visual indication element may indicate a number of 25/5 = 5 aerosol generating sessions. By indicating the remaining aerosol generating sessions, the graphical user interface may indicate the current state of the battery via the visual indication elements 57. In other words, each visual indication element 57 corresponds to 100x1/j % = 100/j % of the total battery capacity. E.g., in the above example, each visual indication element 57 may correspond to about 20% of nominal battery charge, as 100/5 % = 20 %.

Upon initiation of the user interface interaction, the aerosol generating apparatus 1 may be arranged to count up to the current battery charge by successively illuminating visual indication elements 57, starting from the visual indication element 57 arranged closest to the bottom end of the housing, until the user interface of the visual indication, elements shows the current battery charge. To indicate the to indicate the number n of remaining aerosol generating sessions, and thus the current battery charge, the aerosol generating apparatus 1 may count up/successively illuminate a number k of the visual indication elements, where k is a function of $j\times n/m$. Continuing with the above example, in case 18 aerosol generating sessions are remaining, the number k would be a function based on the number $k = 5x17/25 = 3,6$. E.g., in case the function would be quotient function, k would equal 3 as quotient (3,6) = 3. Alternatively, in case the function would be round function, k would equal 4 as round (3,6) = 4. In the first function, 3 visual illumination elements would ultimately be illuminated, which in the second function, 4 visual illumination elements would ultimately be illuminated. Ultimately be illuminated may be understood as being illuminated after the count-up.

As depicted in the sequence of Figs. 7B to 7E, the aerosol generating apparatus 1 switches on one visual indication element 57 at a time, e.g. one visual indication element 57 per second, per half-second or the like, until the number k of visual indication elements corresponding to the current battery charge are illuminated. In the sequence of Figs. 7B to 7E, a total of four visual indication elements 57 are switched on, which could correspond to the previous example with using the round function. Fig. 7B shows one visual indication element 57 being illuminated, Fig. 7C shows two visual indication elements 57 being illuminated, Fig. 7B shows three visual indication elements 57 being illuminated and Fig. 7E shows four visual indication elements 57 being illuminated. The state depicted in Fig. 7E may generally correspond to a battery charge of about 80%, or to a battery charge of between 60% and 80%, and considering the previous example, may correspond to a batter charge of 72% (exemplarily, 18 remaining aerosol generating sessions of a maximum of 25 aerosol generating sessions).

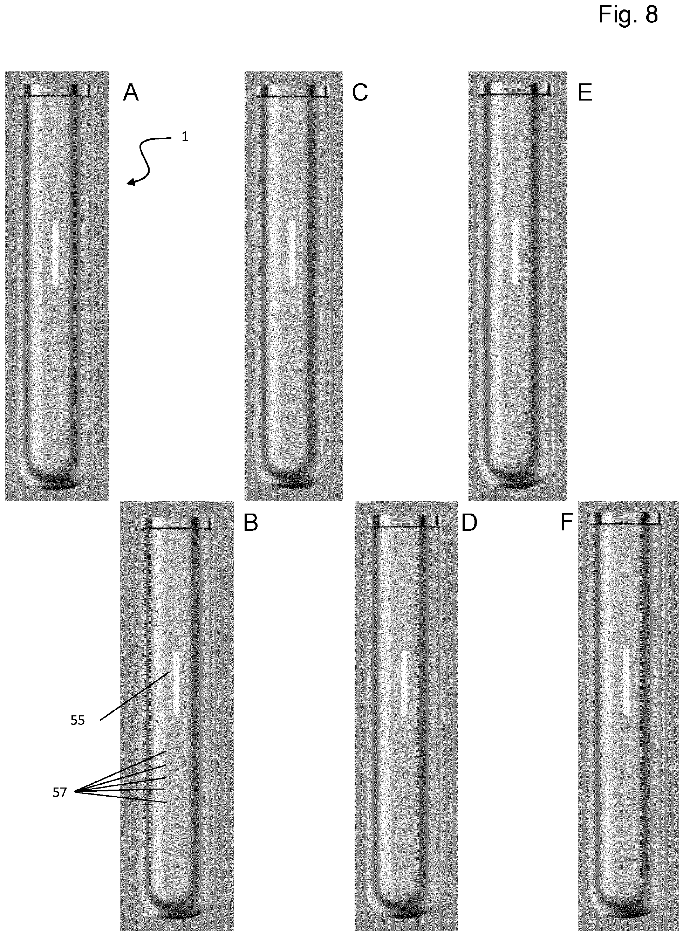

Fig. 7F indicates that the visual indication element 57 second from the top is blinking, as indicated by the flash 99. The aerosol generating apparatus 1 may be arranged to indicate the highest illuminated visual indication element 57 via blinking, to facilitate recognition of the information shown on the user interface by the user. In other words, the aerosol generating apparatus 1 may count up, i.e., successively illuminate, the visual indication elements 57 to arrive at the current battery charge, while the top most illuminated visual indication element 57 is maintained in a blinking mode. Alternatively, a blinking visual indication element 57 may be used to further subdivide a particular range of visualized battery charge. For example, assuming that each visual indication element 57 corresponds to 1/5, i.e., 20%, of the nominal battery capacity, a blinking visual indication element may further subdivide said 20% range into, e.g., two 10% ranges. Considering the blinking visual indication element 57 of Fig. 8F, the blinking may thus convey the information that the current battery charge is between 60% and 70%, while a steady visual indication element 57 may convey the information that the current battery charge is between 70% and 80%. Still further, a blinking visual indication element may be employed to highlight a particular visual indication element and thus its range. In the previous example, a remaining battery capacity of 72% may be indicated by a blinking (instead of a continuously illuminated) visual indication element, as 72% falls into the range of a battery charge of between 60% and 80%.

Referring to Fig. 8, which shows overview of a user interface interaction according to a further embodiment of the present disclosure.

Fig. 8 shows an embodiment of a user interface interaction where the aerosol generating apparatus 1 indicates to a user the duration and in particular the remaining duration of a smoking session. The aerosol generating apparatus 1 may be configured to illuminate a number c of visual indication elements (57) representative of the remaining duration time t1 of the aerosol generating session. The number c of (currently) illuminated visual indication elements is a function of time, and changes as the aerosol generating session progresses through its total duration. As such, the number c is a function of t1/t, but also a function of the number $j$ of individually controllable visual indication elements 57, as it is beneficial that the indicated remaining duration time is visualised by the graphical user interface with a certain granularity. As such, c may be a function of $j\times t1/t$ when counting down, i.e., starting with all $j$ individually controllable visual indication elements 57 illuminated, and the progressively turning visual indication elements off as the time through the aerosol generating session progresses/the remaining duration time decreases. Alternatively, c may be a function of $j\times(1-t1/t)$ when counting up, i.e., starting with no individually controllable visual indication elements 57 illuminated, and the progressively turning visual indication elements on as the time through the aerosol generating session progresses/the remaining duration time decreases.

In Fig. 8, the aerosol generating apparatus 1 has exemplarily j = 5 visual indication elements 57, which are employed to visualise the remaining time. E.g., each visual indication element 57 may indicate one minute of a smoking session, in case the total time for a smoking session is 5 minutes. Alternatively, each visual indication element 57 may indicate 1/2 minute of a smoking session, in case the total time for a smoking session is 2.5 minutes When starting the smoking session (no consumable is shown in Fig. 8 for the sake of clarity), in Fig. 8A, all five visual indication elements 57 are illuminated, indicating said exemplary 5 minutes of remaining smoking session time. During the progression of the smoking session, the visual indication elements 57 are successively switched off, to show a progression of time. E.g., in Fig. 8B, only four visual indication elements 57 are illuminated, indicating an exemplary remaining 4 minutes of the smoking session. Likewise, in Fig. 8C, three visual indication elements 57 are illuminated, indicating a remaining 3 minutes of the smoking session, in Fig. 8D, two visual indication elements 57 are illuminated, indicating a remaining 2 minutes of the smoking session and in Fig. 8E, one visual indication element 57 is illuminated, indicating a remaining 1 minutes of the smoking session. In Fig. 8F, no visual indication element 57 is illuminated, which may indicate the last minute of the smoking session, or that the smoking session has ended.

Likewise, it is conceivable that five illuminated visual indication elements 57 indicate a remaining smoking session time between said 5 minutes and 4 minutes, while four illuminated visual indication elements 57 indicate a remaining smoking session time between 4 minutes and 3 minutes, three illuminated visual indication elements 57 indicate a remaining smoking session time between 3 minutes and 2 minutes, two illuminated visual indication elements 57 indicate a remaining smoking session time between 2 minutes and 1 minutes, one illuminated visual indication elements 57 indicates a remaining smoking session time between 1 minutes and 0 minutes and no illuminated visual indication element 57 indicates a concluded or ended smoking session time.

Thus, the user gets an immediate feedback about the remaining smoking session time or heating session time and can easily adapt the smoking behaviour thereto.

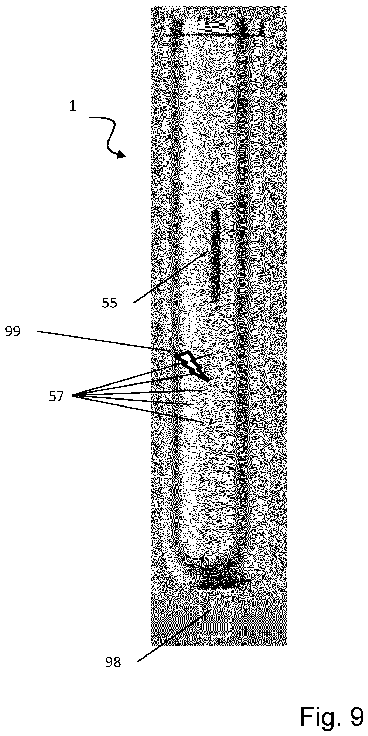

Referring to Fig. 9, which shows an overview of a user interface interaction according to a further embodiment of the present disclosure.

Fig. 9 shows a scenario of a user interface interaction during charging. For example, the aerosol generating apparatus 1, during charging, may be configured to illuminate a number of visual indication elements 57 dependent on the current battery capacity, and wherein each visual indication element corresponds to 100 x 1/j % of the total battery capacity. Thus, in the example considering 5 visual indication elements, each visual indication element may thus correspond to 100 x 1/5 % = 20% of total battery capacity.

In fig. 9, the aerosol generating apparatus 1 is connected to a charger, not depicted, via cable 98 so that energy may be provided to the aerosol generating apparatus 1 to charge the battery 2. Fig. 9, only depicts a single charging status, where, exemplarily, three visual indication elements 57, the bottom three, are illuminated while two visual indication elements 57, the top two, are not illuminated. This may correspond to a charging status where the battery 2 is (currently) charged to about 60%, alternatively charged to between 60% and 80%, further alternatively charged to between 40% and 60% and still further alternatively charged to about 50 %, depending on the specific function used.

The central visual indication element 57 may be blinking , as indicated by the flash 99. A blinking visual indication element may convey the information that the current charge of the battery 2 is in the range depicted by said visual indication element 57. In the example of Fig. 9, this may correspond to a battery charge being between 40% and 60% of the nominal battery charge. Alternatively, a blinking visual indication element may convey additional information, e.g., a further distinction to specify the current charge of the battery more precisely. For example, assuming that each visual indication element 57 corresponds to 1/5, i.e., 20%, of the nominal battery capacity, a blinking visual indication elements may further subdivide said 20% range into, e.g., two 10% ranges. Considering the central visual indication element of Fig. 9, a blinking central visual indication element may thus convey the information that the current battery charge is between 40% and 50%, while a steady central visual indication element may convey the information that the current battery charge is between 50% and 60%.

Upon commencement of the charging, e.g., when cable 98 is plugged into the aerosol generating apparatus 1 and connected to power, the visual indication elements 57 may immediately visualize the current battery capacity by using the respective number of illuminated, non-illuminated and/or blinking visual indication elements 57 as described previously. With an increase of the charge in the battery, additional visual indication elements 57 may alight, so that over the course of the charging, the current battery charge is shown to the user, as varying over time and visualized by the user interface comprising the visual indication elements 57.

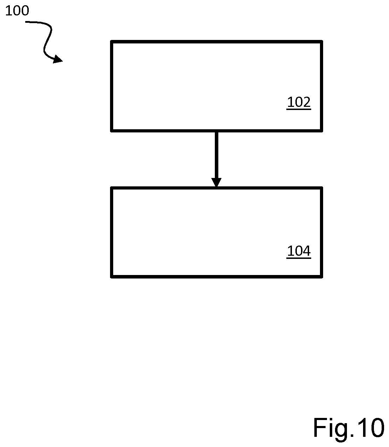

Referring to Fig. 10, which shows a flowchart of a method of operating an aerosol generating apparatus according to an embodiment of the present disclosure.

Fig. 10 shows a method 100 of operating an aerosol generating apparatus, comprising a battery 2, having a total battery capacity for initiating a predefined number m of aerosol generating sessions, a plurality j of individually controllable visual indication elements 57 for indicating the predefined number m of aerosol generating sessions the method comprising the steps of determining 102 the number n of remaining aerosol generating sessions based on the current battery capacity, and controlling 104 the plurality of visual indication elements 57 to indicate the number n of remaining aerosol generating sessions, wherein the controller 12,56 is configured to illuminate a number k of visual indication elements 57, wherein k <= j, and wherein k is a function of $j \times n/m$. In addition to these steps, the method may operate the aerosol generating apparatus in accordance with the following steps, which may be realised separately and independently from the previously described steps. Therefore, the method may further comprise the steps of initiating an aerosol generating session having a predetermined total duration time t, and, when initiated, of determining the remaining duration time t1 of the aerosol generating session, and of indicating the remaining duration time by controlling the visual indication elements 57, wherein optionally the total duration time t is evenly divisible by the number of visual indication elements 57, and/or of illuminating, during charging, a number of visual indication elements 57 dependent on the current battery capacity, wherein each visual indication element 57 corresponds to 100 x 1/j % of the total battery capacity.

**Claims**

1. Aerosol generating apparatus (1), comprising

   a battery (2), having a total battery capacity for initiating a predefined number $m$ of aerosol generating sessions,
   a plurality $j$ of individually controllable visual indication elements (57) for indicating the predefined number $m$ of aerosol generating sessions, and
   a controller (12,56) configured to:

   determine the number $n$ of remaining aerosol generating sessions based on the current battery capacity, and
   control the plurality of visual indication elements (57) to indicate the number $n$ of remaining aerosol

   generating sessions by illuminating a number k of the visual indication elements,
   wherein $k <= j$ and $n <= m$,
   
   wherein k is a function of $j \times \dfrac{n}{m}$,
   and
   wherein j, k, m, n are whole numbers.

2. Aerosol generating apparatus according to the preceding claim,

   wherein the controller (12,56) is configured to illuminate a number k of visual indication elements (57); and

   wherein $k = quotient\left(j \times \dfrac{n}{m}\right)$ or

   $$k = round\left(j \times \dfrac{n}{m}\right).$$

3. Aerosol generating apparatus according to any one of the preceding claims,

   wherein at least one of the plurality of visual indication elements (57) is arranged to illuminate at a plurality of different illumination levels, and

   wherein the controller (12,56) is configured to illuminate said at least one visual indication element (57) at a level corresponding to the

   $$remainder \left(j \times \dfrac{n}{m}\right).$$

4. Aerosol generating apparatus according to claim 3,

   wherein the number of different illumination levels is equal to $(m/j)$,
   wherein optionally $m$ and $j$ are selected such that $(m/j)$ is a natural number,
   for example $(m/j) = (2$ or $3$ or $4$ or $5$ or $6)$.

5. Aerosol generating apparatus according to any one of the preceding claims,
   wherein $j=(4$ or $5$ or $6$ or $10)$ and/or $m=(8$ or $10$ or $12$ or $15$ or $16$ or $18$ or $20$ or $24$ or $25$ or $30$ or $36)$.

6. Aerosol generating apparatus according to any one of the preceding claims,

   wherein the controller (12,56) is further configured to initiate an aerosol generating session having a predetermined total duration time $t$, and, when initiated,
   the controller (12,56) is configured to determine the remaining duration time $t_1$ of the aerosol generating session, and
   wherein the controller (12,56) is configured to control the visual indication elements (57) to indicate the remaining duration time $t_1$.

7. Aerosol generating apparatus according to claim 6,

   wherein the controller (12,56) is configured to illuminate a number $c$ of visual indication elements (57) representative of the remaining duration time $t_1$ of the aerosol generating session, and

   wherein $c = quotient\left(j \times \dfrac{t_1}{t}\right) + 1$ if $0 < t_1 < t$,
   or
   wherein

   $$c = quotient\left(j \times \left(1 - \dfrac{t_1}{t}\right)\right) \quad if\ 0 \le t_1 \le t,$$
   or

   wherein $c = round\left(j \times \dfrac{t_1}{t}\right)$,

   or

wherein $c = round\ (j \times (1 - \frac{t_1}{t}))$.

8. Aerosol generating apparatus according to claim 6,

   wherein at least one of the plurality of visual indication elements (57) is arranged to illuminate at a plurality of different illumination levels, and

   wherein the controller (12,56) is configured to illuminate said at least one visual indication element (57) at a level corresponding to the remainder $(j \times \frac{t_1}{t})$.

9. Aerosol generating apparatus according to claim 6,

   wherein the controller (12,56) is configured to illuminate a number $c$ of visual indication elements (57) representative of the remaining duration time $t_1$ of the aerosol generating session, wherein $c = quotient\ (j \times \frac{t_1}{t})$, and

   wherein the controller (12,56) is configured to contrastingly illuminate a further visual indication element (57) if $t_1 > 0$.

10. Aerosol generating apparatus according to any one of the preceding claims,

    wherein the controller (12,56), during charging, is configured to illuminate a number of visual indication elements (57) dependent on the current battery capacity, and

    wherein each visual indication element corresponds to 100 x $1/j$ % of the total battery capacity.

11. Aerosol generating apparatus according to any one of the preceding claims,
    wherein $j=5$.

12. Method (100) of operating an aerosol generating apparatus, comprising

    a battery (2), having a total battery capacity for initiating a predefined number $m$ of aerosol generating sessions, and
    a plurality $j$ of individually controllable visual indication elements (57) for indicating the predefined number $m$ of aerosol generating sessions
    the method comprising the steps:

    determine (102) the number $n$ of remaining aerosol generating sessions based on the current battery capacity, and
control (104) the plurality of visual indication elements (57) to indicate the number $n$ of remaining aerosol generating sessions by illuminating a number k of the visual indication elements,
wherein $k <= j$, $n <= m$ and

wherein k is a function of $j \times \frac{n}{m}$, and

wherein j, k, m, n are whole numbers.

13. Method according to the preceding claim, further comprising

    initiate an aerosol generating session having a predetermined total duration time $t$, and, when initiated,
    determine the remaining duration time $t_1$ of the aerosol generating session, and
    control the visual indication elements (57) to indicate the remaining duration time $t_1$.

14. Method according to any one of the preceding claims 13 or 14,

    illuminate, during charging, a number of visual indication elements (57) dependent on the current battery capacity,
    wherein each visual indication element (57) corresponds to 100 x $1/j$ % of the total battery capacity.

15. Computer program product or computer readable storage medium comprising instructions which, when executed by a processing element, cause the processing element to carry out the step of the method of any one of claims 12 to 14.

1

| 2 Power supply | 4 Aerosol Gen. Unit |
| 6 Precursor | 8 Delivery system |

Fig. 1

Fig. 2

Fig. 3a

Fig. 3b

1

**50 Body**

| 2 Power supply |

| 52 Heating system |
| 54 Heating element(s) |

| 56 Electrical circuitry |

| 58 Memory |

| 60 Wireless interface |

| 62 Other component(s) |

**70 Consumable**

| 6 Precursor |

## Fig. 4

1

70

51

53

50

55

57

## Fig. 5

80

Application server 84

Network 88

82

86

Charging station 1

Fig. 6

Fig. 7

Fig. 8

Fig. 9

100

102

104

Fig.10

Europäisches
Patentamt

European
Patent Office

Office européen
des brevets

# EUROPEAN SEARCH REPORT

**Application Number**

EP 24 20 7266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/023628 A1 (BOUCHUIGUIR LAYTH SLIMAN [CH] ET AL) 25 January 2024 (2024-01-25) | 1-5, 10-12, 14,15 | INV. H02J7/00 A24F40/50 A24F40/60 |
| Y | * paragraphs [0035] - [0061], [0082] - [0089]; figures 1,2,3,7 * ----- | 6-9,13 | |
| X | US 2024/251870 A1 (PILATOWICZ GRZEGORZ ALEKSANDER [CH]) 1 August 2024 (2024-08-01) | 1,6-9, 12,13,15 | |
| Y | * paragraphs [0020] - [0045], [0068] - [0078], [0086] - [0088]; figures 1,2,4,5,7,8 * ----- | 6-9,13 | |
| X | US 2023/255268 A1 (OLIANA VALERIO [CH]) 17 August 2023 (2023-08-17) * paragraphs [0005] - [0072], [0076] - [0092]; figures 1,2,5 * ----- | 1,12,15 | |
| X | KR 2024 0001654 A (JAPAN TOBACCO INC [JP]) 3 January 2024 (2024-01-03) * paragraphs [0303] - [0399]; figures 1,9-16 * ----- | 1,12,15 | **TECHNICAL FIELDS SEARCHED (IPC)** H02J A24F |

The present search report has been drawn up for all claims

| Place of search | Date of completion of the search | Examiner |
|---|---|---|
| Munich | 19 March 2025 | Bergler, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 7266

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2025

| Patent document cited in search report | Publication date | Patent family member(s) | | Publication date |
|---|---|---|---|---|
| US 2024023628 A1 | 25-01-2024 | CN | 116806126 A | 26-09-2023 |
| | | EP | 4032419 A1 | 27-07-2022 |
| | | EP | 4284202 A1 | 06-12-2023 |
| | | JP | 2024504420 A | 31-01-2024 |
| | | KR | 20230137941 A | 05-10-2023 |
| | | TW | 202232122 A | 16-08-2022 |
| | | US | 2024023628 A1 | 25-01-2024 |
| | | WO | 2022161932 A1 | 04-08-2022 |
| US 2024251870 A1 | 01-08-2024 | CN | 117479855 A | 30-01-2024 |
| | | EP | 4355151 A1 | 24-04-2024 |
| | | JP | 2024521291 A | 31-05-2024 |
| | | KR | 20240023025 A | 20-02-2024 |
| | | TW | 202300040 A | 01-01-2023 |
| | | US | 2024251870 A1 | 01-08-2024 |
| | | WO | 2022263645 A1 | 22-12-2022 |
| US 2023255268 A1 | 17-08-2023 | BR | 112022026452 A2 | 31-01-2023 |
| | | CN | 115942886 A | 07-04-2023 |
| | | EP | 3932225 A1 | 05-01-2022 |
| | | EP | 4171288 A1 | 03-05-2023 |
| | | IL | 299347 A | 01-02-2023 |
| | | JP | 2023531058 A | 20-07-2023 |
| | | KR | 20230029786 A | 03-03-2023 |
| | | PH | 12022553500 A1 | 22-04-2024 |
| | | PL | 3932225 T3 | 03-10-2022 |
| | | US | 2023255268 A1 | 17-08-2023 |
| | | WO | 2022003071 A1 | 06-01-2022 |
| KR 20240001654 A | 03-01-2024 | CN | 115803703 A | 14-03-2023 |
| | | EP | 4332729 A1 | 06-03-2024 |
| | | JP | WO2022230232 A1 | 03-11-2022 |
| | | KR | 20240001654 A | 03-01-2024 |
| | | US | 2023114675 A1 | 13-04-2023 |
| | | WO | 2022230232 A1 | 03-11-2022 |

EPO FORM P0459

For more details about this annex : see Official Journal of the European Patent Office, No. 12/82